# EUROPEAN PATENT APPLICATION

(11) **EP 4 818 231 A1**
(43) Date of publication of application: **07.10.2026**
(21) Application number: 25167438.8
(22) Date of filing: 31.03.2025
(51) Int. Cl.: C08H 7/00, C07G 1/00, C08L 23/12, C09K 21/12, C09K 21/14

(54) **DEPOLYMERIZED LIGNIN MODIFIED WITH PHOSPHOROUS AND NITROGEN AS FLAME RETARDANT ADDITIVE AND RELATED METHODS**

(71) Applicant: VITO NV, 2400 Mol (BE)
(72) Inventor: RUBENS, Maarten, 2400 Mol (BE); DRISCOLL, Oliver James Burgoyne, 2400 Mol (BE); CORDERI GANDARA, Sandra, 2400 Mol (BE)
(74) Representative: Arnold & Siedsma

(57) **Abstract**

The invention relates to a method for preparing a phosphorous and nitrogen modified depolymerized lignin. This method involves providing a depolymerized lignin and treating it with a phosphorylation agent and an amine reagent to enhance its thermal stability compared to polymerized lignin. The depolymerized lignin is characterized by specific molecular weight ranges and polydispersity index. The modified lignin contains specific percentages of phosphorous and nitrogen and can be used as a flame retardant additive in blends with polymers having higher melting points. The phosphorylation agent and amine reagent are selected from specific groups, and the depolymerized lignin is obtained through reductive catalytic depolymerization, which can be performed in batch or continuous fashion using specific conditions and catalysts.

## Description

### TECHNICAL FIELD

The present disclosure relates to the modification of depolymerized lignin with phosphorous and nitrogen, and more particularly, to its use as a flame-retardant additive.

### BACKGROUND

Lignin is a complex organic polymer found in the cell walls of plants, particularly in wood and bark, making it one of the most abundant natural polymers on Earth. It plays a crucial role in providing structural support, water transport, and resistance against microbial attacks in plants. However, its complex and heterogeneous structure has historically made it challenging to utilize in industrial applications. In recent years, there has been a growing interest in valorizing lignin due to its potential as a renewable resource for producing value-added products. One of the promising areas of research is the depolymerization of lignin, which involves breaking down its complex structure into smaller, more manageable molecules that can be further modified for various applications.

The need for sustainable and effective flame retardants has become increasingly important as industries seek to reduce the environmental impact of traditional flame-retardant chemicals, which often contain halogens and other environmentally harmful substances. Flame retardants are crucial in enhancing the fire safety of materials, particularly in construction, textiles, and electronics. The challenge lies in developing flame retardants that not only meet safety standards but also align with environmental sustainability goals. The modification of natural polymers like lignin to enhance their flame-retardant properties presents a promising solution to this challenge, offering a pathway to create safer and more sustainable materials.

### SUMMARY

The present invention is centered around the use of a phosphorous and nitrogen modified depolymerized lignin as flame retardant including its application as a flame-retardant additive. In a first aspect it provides a method of preparing such a phosphorous and nitrogen modified depolymerized lignin.

The method may involve preparing a phosphorous and nitrogen modified depolymerized lignin by first providing a depolymerized lignin. The depolymerized lignin can be treated with a phosphorylation agent and an amine reagent to obtain a modified lignin with increased thermal stability compared to polymerized lignin. The thermal stability may be determined using thermogravimetric analysis. The observed increase in temperature stability, is a novel finding that has not been reported in existing literature. Previous studies have primarily focused on technical lignin's, such as Kraft lignin in US 2014/0249255 which only exhibit a limited temperature stability when modified with phosphorous and/or nitrogen.

The use of depolymerized lignin in this invention, however, has led to a significant enhancement in thermal stability. But only when the depolymerized lignin is modified with both phosphorous and nitrogen. This unique combination and the resulting properties open new possibilities for the use of lignin, especially in flame retardant applications with high-melting-point polymers like nylon and polypropylene.

Depolymerized lignin as used herein, generically refers to lignin that has undergone a chemical or enzymatic process to break its polymer structure into smaller molecular components. Lignin is a complex polymer found in the cell walls of plants, and it provides rigidity and protection. In the past few decades, various lignin depolymerization strategies have been developed, which can be generally categorized as: reductive, oxidative, acid-catalyzed, base-catalyzed, thermal methods, etc. (Sun et al. 2018, Behling et al. 2016, Li et al. 2015, Schutyser and Kruger et al. 2018). In general, a depolymerization process breaks the interunit linkages within the lignin macromolecule, converting complex lignin polymers into oligomers or monomeric aromatic products that can be further modified for various applications.

In a particular embodiment the depolymerized lignin, hereinafter also referred to as DLO, used in the methods of modification as herein provided can be characterized in having a number average molecular weight (Mn) ranging from 200 to 1500 g/mol, a weight average molecular weight (Mw) ranging from 200 to 4000 g/mol, and a polydispersity index ranging from 1 to 4.

The modified lignin can contain from 1% to 50% phosphorous and from 1% to 30% nitrogen; in particular from 1% to 15% phosphorous and from 1% to 30% nitrogen.

In the method of modifying the depolymerized lignin the phosphorylation agent may be selected from examples such as phosphorus pentoxide, phosphoric acid, phosphorus oxychloride, phenylphosphonic acid, hexachlorocyclotriphosphazene, 9,10-dihydro-9-oxa-10-phosphaphenanthrene 10-oxide (DOPO) and, diethyl phosphite.

The amine reagent can be selected from examples such as melamine, adenine, aniline, diethylenetriamine, and guanine.

In modifying the depolymerized lignin, the former may be treated first with the phosphorylation agent and subsequently with the amine reagent or vice versa.

In an embodiment of the invention, the depolymerized lignin used in the methods of modification as herein provided may be obtained through reductive catalytic depolymerization of biomass or lignin. Accordingly, in an embodiment of the invention the method comprises a step of obtaining the depolymerized lignin through reductive catalytic depolymerization of a lignin; in particular of soluble lignin; more in particular of soluble lignin as further characterized hereinafter.

The reductive catalytic depolymerization can be performed in either a batch or continuous fashion.

In an embodiment the batch reductive depolymerization may be performed on soluble lignin fractions obtained by mixing a lignin or lignin comprising source material in an oxygen containing (at least one oxygen atom) organic solvents, preferentially methanol, ethanol, isopropanol, alkylphenols or polyols such as ethylene glycol and propylene glycol at temperatures between 25°C and 150°C, preferentially methanol at 20 wt% for 4 hours at 50 °C and separating the insoluble fraction via vacuum filtration, thereby obtaining the soluble lignin as filtrate.

In a preferred embodiment the batch reductive depolymerization of the soluble lignin fraction includes exposing the soluble lignin fraction in a reactor at temperature in the range of 200°C to 235 °C (such as 200, 215, 225, and 235 °C) for up to and about 2 hours over 5% Pd/C with an initial H₂ pressure of up to and about 30 bar.

In an alternative embodiment the reductive depolymerization is performed in a continuous fashion, for example using a continuous flow reactor with lignin solutions, preferably soluble lignin, pumped at flow rates of ranging from 25 to 100 ml per hour (such as 25, 35, 50, and 100 mL per hour) through a fixed bed reactor at temperatures in the range of 200°C to 235°C (such as 200, 215, 225, and 235 °C).

The catalysts used in the continuous lignin depolymerization can be 1% Pd and 2% Pd on Al₂O₃ support.

A phosphorous and nitrogen modified depolymerized lignin may be used as a flame-retardant additive in blends with polymers having higher melting points. The phosphorous and nitrogen modified depolymerized lignin for use as a flame retardant or as a flame-retardant additive can be obtained according to any one of the methods herein provided.

### BRIEF DESCRIPTION OF THE DRAWINGS

FIG. 1 provides heat release rate (HRR) results (using cone calorimetry) from polypropylene (PP) + 20 wt% lignin blends prepared for different lignin samples as detailed in Table 8.
FIG. 2 provides the TGA results of the different DLOs (modified and unmodified) and polymeric lignin as detailed in Table 10.

### DETAILED DESCRIPTION

In a first aspect the present disclosure provides a method for preparing a phosphorous and nitrogen modified depolymerized lignin, which may be used as a flame-retardant additive. The process involves treating depolymerized lignin with a phosphorylation agent and an amine reagent to obtain a modified lignin with increased thermal stability. The depolymerized lignin can be characterized by its molecular weight and polydispersity index, which define its properties (*supra*). The phosphorylation agents may include phosphorus pentoxide, phosphoric acid, and others, while the amine reagents may include melamine, adenine, and others. In a particular embodiment the depolymerized lignin may be obtained through reductive catalytic depolymerization, which can be performed in either batch or continuous mode. The modified depolymerized lignin may enhance flame retardancy in polymer blends, particularly those with higher melting points, such as engineering polymers. The process may involve using specific catalysts to facilitate reductive catalytic depolymerization, ensuring the production of depolymerized lignin suitable for further modification.

In the process of preparing phosphorous and nitrogen modified depolymerized lignin, the depolymerized lignin may be treated with a phosphorylation agent and an amine reagent. This treatment can be performed to achieve amination and phosphorylation, which may result in a phosphorous and nitrogen modified depolymerized lignin with increased thermal stability. The phosphorylation agent may be selected from a group that includes phosphorus pentoxide, phosphoric acid, phosphorus oxychloride, phenylphosphonic acid, hexachlorocyclotriphosphazene, 9,10-dihydro-9-oxa-10-phosphaphenanthrene 10-oxide (DOPO) and, diethyl phosphite. Similarly, the amine reagent may be chosen from melamine, adenine, aniline, diethylenetriamine, and guanine. The phosphorous and nitrogen modified depolymerized lignin may be used as a flame-retardant additive in polymer blends, potentially enhancing flame retardancy. The selection of depolymerized lignin may be crucial in achieving the desired modification and thermal stability. The process may involve the use of depolymerized lignin characterized by specific molecular weight and polydispersity index (*infra*), which may define its properties.

The depolymerized lignin may be characterized by its molecular weight and polydispersity index, which can define its properties. The number average molecular weight (Mn) may range from 200 to 1500, while the weight average molecular weight (Mw) may range from 200 to 4000, and the polydispersity index (PDI), being the ratio of Mw over Mn may range from 1 to 4. The molar mass parameters M_{W} and Mₙ can be determined using procedures known in the state of the art, such as the Gel Permeation Chromatography (GPC) protocol disclosed in Jusner P. et al, Chemical Engineering Journal 499 (2024), 156474.

In addition to the aforementioned molecular mass parameters, the depolymerized lignin (DLO) could further be characterized based on the OH-distribution as determined by P³¹ NMR according to Gracia-Vitoria et al., Ind. Crop. Prod. 176 (2022) 114405. Compared to polymeric lignin, in depolymerized lignin the content of aliphatic OH-functionalities (AlOH) is reduced and the content in condensed aromatic OH-moieties (CarOH) and uncondensed aromatic OH-moieties (UArOH) increased. For the depolymerized lignin the content of AlOH expressed in mmol/g ranges from 2,0 to 3,5; the content of CarOH expressed in mmol/g ranges from 2,0 to 3,1; and the content of UrOH expressed in mmol/g ranges from 0,75 to 1,00.

Hence in a particular embodiment according to the invention, the depolymerized lignin (DLO) used in the modification process, consists of a depolymerized lignin characterized by means of the molecular mass parameters and the OH distribution as specified in the above mentioned paragraphs; in particular with for the molecular mass parameters Mn ranging from 200 to 1500, Mw ranging from 200 to 4000, and PDI ranging from 1 to 4; and the OH distribution expressed as the relative content in mol/g for AlOH ranging from 2,0 to 3,5; for CarOH from 2,0 to 3,1 and for UrOH ranging from 0,75 to 1,00.

The modification process involves treating the depolymerized lignin with a phosphorylation agent and an amine reagent to obtain a phosphorous and nitrogen modified depolymerized lignin. This modification enhances the thermal stability of the lignin, making it a potential flame retardant additive in blends with polymers having higher melting points. The phosphorous and nitrogen modified depolymerized lignin may contain from 1% to 50% phosphorous and from 1% to 30% nitrogen; in particular from 1% to 15% phosphorous and from 1% to 30% nitrogen. The amount of nitrogen and phosphorous being determined using Elemental Analysis (EA) and inductively coupled plasma optical emission spectroscopy (ICP-OES), and expressed as a weight percent composition.

Elemental analysis is based on controlled, dynamic combustion of samples in a reactor and measurement of the amount of the corresponding oxides. The samples are combusted in the column filled with an oxidizing-reducing catalytic bed with an electronically-controlled temperature. The evolved gases are usually directed an analyzer, which is usually a simplified version of the gas chromatograph. All gases (H₂O, CO, CO₂ and NₓO_{y}) are separated by chromatographic columns and then detected on a thermally conductive detector (TCD).

Inductively coupled plasma optical emission spectroscopy (ICP-OES), also referred to as inductively coupled plasma atomic emission spectroscopy (ICP-AES), is an analytical technique used for the detection of chemical elements. It is a type of emission spectroscopy that uses an inductively coupled plasma to produce excited atoms and ions that emit electromagnetic radiation at wavelengths characteristic of a particular element.

According to an embodiment, the depolymerized lignin may be obtained through a process of reductive catalytic depolymerization. This process may for example involve performing batch depolymerization on soluble lignin fractions, which can be achieved by mixing lignin in a suitable solvent such oxygen containing (at least one oxygen atom) organic solvents, preferentially methanol, ethanol, isopropanol, alkylphenols or polyols such as ethylene glycol and propylene glycol, more preferably methanol and separating the insoluble fraction from the mixture such as via vacuum filtration. The soluble lignin fraction may then be subjected to a reaction in an autoclave reactor, such as the PREMEX Avalon batch reactor, at elevated temperatures and pressures, utilizing catalysts like Pd/C. The reaction may be quenched using a water bath, and the catalyst may be removed by vacuum filtration over Celite. The filtrate may be dried using rotary evaporation and a vacuum oven. Continuous lignin depolymerization may also be carried out using a continuous flow reactor, where lignin solutions are pumped through a fixed bed reactor at controlled flow rates and temperatures. Catalysts such as Pd on Al₂O₃ support may be employed, and the system may be pressurized with a constant H₂ flow. The back pressure regulator may be set to maintain the desired pressure, and samples may be collected for analysis. The collected samples may be pre-dried under reduced pressure and further dried in a vacuum oven. This process may facilitate the production of depolymerized lignin, which can be characterized by its molecular weight and polydispersity index (*supra*). The depolymerized lignin will then be treated with a phosphorylation agent and an amine reagent to obtain a phosphorous and nitrogen modified depolymerized lignin. This modified depolymerized lignin may be used as a flame-retardant additive, potentially enhancing the thermal stability of polymer blends.

This treatment which can be done using procedures known in the state of the art which will result in the formation of a phosphorous and nitrogen modified depolymerized lignin. With reference to the examples hereinafter, the selection of the phosphorylation agent may be from a specified group, which can include phosphorus pentoxide, phosphoric acid, phosphorus oxychloride, phenylphosphonic acid, hexachlorocyclotriphosphazene, 9,10-dihydro-9-oxa-10-phosphaphenanthrene 10-oxide (DOPO), and diethyl phosphite. Similarly, the amine reagent may be chosen from a group that includes melamine, adenine, aniline, diethylenetriamine, and guanine.

### EXAMPLES

### Materials and Methods

### Reductive catalytic depolymerization of lignin

Soluble lignin fractions were obtained by mixing hydrolysis lignin (L1) or organosolve lignin (L2) in methanol at 20 wt % for 4 h at 50 °C and by separating the insoluble fraction via vacuum filtration. Lignin depolymerization was carried out on the soluble lignin fractions in either a batch or continuous fashion. Batch depolymerization was performed in a 100 mL PREMEX Avalon batch reactor at 235 °C (heating ramp 10 °C min⁻¹) for 2 h over 5% Pd/C (Sigma-Aldrich) with an initial H₂ pressure of 30 bar. After 2 h of reaction, the autoclave reactor was quickly quenched with a water bath. Prior to the reactor being opened, it was flushed with N₂ to remove the excess H₂. The catalyst was then removed by vacuum filtration over Celite, and the filtrate was dried by rotary evaporation and in the vacuum oven at 40 °C overnight. The characteristics of the obtained depolymerized lignin, from lignin L1 are summarized as DLO1, in Table 1 below.

Continuous lignin depolymerization was carried out by using a continuous flow reactor. First, the obtained soluble lignin fractions were diluted to the targeted concentrations (16 wt % of lignin) through the addition of fresh toluene. The lignin solutions were pumped with flow rates of 25, \mL min⁻¹ through a fixed bed reactor. The reactor temperature was 200, °C. The catalyst used was 1% Pd on Al₂O₃ support (Heraeus). The back pressure regulator was set to 80 bar and the system was pressurized by means of a constant H₂ flow of 1500 N mL h⁻¹. The sample was collected over a period of 1 h.. The collected sample was pre-dried under reduced pressure (rotary evaporation) and subsequently placed into the vacuum oven at 45 °C overnight. The characteristics of the obtained depolymerized lignin, from lignin L2 are summarized as DLO2 in Table 1 below.

**Table 1 - DLO Characteristics**

| | OH value (mmol/g) | | | | | GPC [UV detector] (g/mol) | | | Monome r content in sample (%) |
|---|---|---|---|---|---|---|---|---|---|
| DLO | AlOH | CArOH | UnArOH | COOH | Total OH | Mw | Mn | PDI | |
| DLO1 | 2,11 | 3,09 | 0,75 | 0,11 | 6,06 | 1770 | 1010 | 2,72 | 0,76 |
| DLO2 | 3,36 | 2,03 | 0,81 | 0,08 | 6,28 | 1710 | 739 | 2,32 | 14,78 |

Different Examples of N,P and P,N modifications of the start lignin and of the obtained DLO.

### Example 1. N,P modification of lignin and DLO with phosphorus pentoxide

The lignin was dissolved in 0.1M NaOH solution at a concentration of 5.0 wt% lignin by stirring at room temperature until all the lignin was dissolved by using a mechanical stirrer. Next, formaldehyde solution (37 wt% in water) was added to the alkaline lignin solution in a ratio of 5.5 molar equivalents to the total hydroxy content of the lignin. Next, the amine reagent was added to the solution in ratio of 1.3 molar equivalents to the total hydroxy content of the lignin. The reaction mixture was heated to 70 °C and allowed to react overnight (16-24h). Afterwards, the reaction mixture was cooled down to 0 °C, and phosphorous pentoxide (1.0 molar equivalents to the total hydroxyl content of the lignin) was added slowly in small portions. The reaction was allowed to heat up to room temperature and then stirred overnight at 70 °C (16-24h). After the reaction, a pH of 1-3 was measured and the product (N, P-lignin) was obtained by filtration and washing with water. After washing with water, the product was collected and dried for at least one day in a vacuum oven at 45 °C. In this and all following examples , the product was analyzed with elemental analysis and ICP-OES to obtain the nitrogen and the phosphorous content of the samples. The results are summarized in the table 2 below and expressed as percent composition.

**Table 2 - P and N content of the different samples prepared according to example 1 and expressed as percent composition.**

| **Sample** | **Details** | **P% content** | **N% content** |
|---|---|---|---|
| DLO1-MEL-P2O5 | DLO1 - N,P modified (melamine) | 6,6 ± 0,1 | 20,3 ± 0,1 |
| DLO1-ADE-P2O5 | DLO1 - N,P modified (adenine) | 1,1 ± 0,1 | 5,1 ± 0,1 |
| DLO1-ANI-P2O5 | DLO1 - N,P modified (aniline) | 4,8 ± 0,8 | 4,6 ± 0,1 |
| DLO2-MEL-P2O5 | DLO2 - N,P modified (melamine) | 6,8 ± 0,4 | 23,7 ± 0,7 |
| L1-MEL-P2O5 | Start lignin - N,P modified (melamine) | 7,2 ± 0,2 | 22,5 ± 0,3 |

### Example 2. N,P modification of DLO with phosphoric acid

The lignin was dissolved in 0.1M NaOH solution at a concentration of 5.0 wt% lignin by stirring at room temperature until all the lignin was dissolved by using a mechanical stirrer. Next, formaldehyde solution (37 wt% in water) was added to the alkaline lignin solution in a ratio of 5.5 molar equivalents to the total hydroxy content of the lignin. Next, the amine reagent was added to the solution in ratio of 1.3 molar equivalents to the total hydroxy content of the lignin. The reaction mixture was heated to 70 °C and allowed to react overnight (16-24h). Afterwards, the reaction mixture was cooled down to 0 °C, and phosphoric acid (1.0 molar equivalents to the total hydroxyl content of the lignin) was added slowly. The reaction was allowed to heat up to room temperature and then stirred overnight at 70 °C (16-24h). After the reaction, a pH of 2 was measured and the product (N,P-lignin) was obtained by filtration and washing with water. After washing with water, the product was collected and dried for at least one day in a vacuum oven at 45 °C. The product was analyzed with elemental analysis and ICP-OES to obtain the nitrogen and the phosphorous content of the samples. The results is summarized in the table 3 below.

**Table 3 - P and N content of the sample prepared according to example 2 and expressed as percent composition.**

| **Sample** | **Details** | **P% content** | **N% content** |
|---|---|---|---|
| DLO1-MEL-H3PO4 | DLO1PA - N,P modified (melamine) | 3,0 ± 0,1 | 24,6 ± 0,3 |

### Example 3. P,N-modification of DLO with phosphorus oxychloride

Under a nitrogen atmosphere, the lignin was dissolved in THF at a concentration of 9 wt% and stirred until dissolved. Triethylamine (3 molar equivalents with respect to the total hydroxy content of the lignin) was added. The reaction was cooled to 0 °C and POCl₃ (1.3 molar equivalents with respect to the total hydroxy content of the lignin) added dropwise. The mixture was allowed to warm to room temperature and stirred overnight. Afterwards, the flask was cooled to 0 °C and the reaction quenched with water. The mixture was stirred at room temperature to ensure the ammonium by-product salts dissolved and filtered to isolate the P-DLO solid. After washing with 15% H₂SO₄ and further water, this product was collected and dried for at least one day in a vacuum oven at 45 ° C. Next, P-DLO was then stirred in DMF at a concentration of 10 wt% and the amine reagent (1 molar equivalents with respect to the total hydroxy content of the original lignin) was added (melamine, adenine, guanine, or aniline amines were tried). The mixture was stirred at 50 °C overnight and at 60 °C for two hours. The solvent was removed in vacuo and the product rinsed with methanol (the aniline amine was done both with and without the methanol rinse) and filtered. The P'N-DLO solid product was obtained and dried for at least one day in a vacuum oven at 45 ° C. The product was analyzed with elemental analysis and ICP-OES to obtain the nitrogen and the phosphorous content of the samples. The results are summarized in the table 4 below.

**Table 4 - P and N content of the samples prepared according to example 3 and expressed as percent composition.**

| **Sample** | **Details** | **P% content** | **N% content** |
|---|---|---|---|
| DLO1-POCl3 | DLO1PO - P modified | 7,5 ± 0,2 | 1,4 ± 0,1 |
| DLO1-POCl3-MEL | DLO1PO - P,N modified (melamine) | 4,2 ± 0,1 | 28,3 ± 0,2 |
| DLO1-POCl3-ADE | DLO1PO - P,N modified (adenine) | 4,0 ± 0,1 | 24,0 ± 0,4 |
| DLO1-POCl3-GUA | DLO1PO - P,N modified (guanine) | 3,6 ± 0,1 | 23,8 ± 0,2 |
| DLO1-POCl3-ANI | DLO1PO - P,N modified (aniline) | 6,7 ± 0,1 | 3,2 ± 0,1 |
| DLO1-POCl3-ANI (-MeOH) | DLO1PO - P,N modified (aniline), no MeOH rinse | 5,4 ± 0,3 | 4,2 ± 0,2 |

### Example 4. N,P modification of DLO with phenylphosphonic acid

The lignin was dissolved in 0.1M NaOH solution at a concentration of 9 wt% lignin by stirring at room temperature until all the lignin was dissolved by using a mechanical stirrer. Next, formaldehyde solution (37 wt% in water) was added to the alkaline lignin solution in a ratio of 5.5 molar equivalents to the total hydroxy content of the lignin. Next, the amine reagent was added to the solution in ratio of 1.3 molar equivalents to the total hydroxy content of the lignin. The reaction mixture was heated to 70 °C and allowed to react overnight (16-24h). Afterwards, the reaction mixture was allowed to cool down to room temperature and acidified to a pH of 3 using 1M HCl. The product (N-lignin) was obtained by filtration and washing with water. After washing with water, the product was collected and dried for at least one day in a vacuum oven at 45 °C. Next, the N-lignin solid was then stirred with DMF at a concentration of 12 wt% and phenylphosphonic acid (1 molar equivalents with respect to the total hydroxy content of the original lignin) was added. The mixture was stirred at 60 °C for two hours and at 50 °C overnight. The solvent was removed in vacuo to obtain the N,P-DLO solid product which was dried for at least one day in a vacuum oven at 45 ° C. The product was analyzed with elemental analysis and ICP-OES to obtain the nitrogen and the phosphorous content of the samples. The result is summarized in the table 5 below.

**Table 5 - P and N content of the sample prepared according to example 4 and expressed as percent composition.**

| **Sample** | **Details** | **P% content** | **N% content** |
|---|---|---|---|
| DLO1-MEL-PhPO(OH)2 | DLO1PP - N,P modified (melamine) | 8,9 ± 0,1 | 10,0 ± 0,2 |

### Example 5. P'N-modification of DLO with HCCP

The lignin was dissolved in THF at a concentration of 3,3 wt% and stirred for 30 minutes at 40 °C. Next, potassium carbonate (K₂CO₃) (6.5 molar equivalents to the total hydroxy content of the lignin) was added and stirred for 30 minutes at 40 °C. Next, hexachlorocyclotriphosphazene (HCCP) (1.0 molar equivalents to the total hydroxy content of the lignin) was added to the reaction mixture. The mixture was refluxed at 70 °C overnight (16-24h) and cooled to room temperature before the addition of aniline (5.5 molar equivalents to the total hydroxy content of the lignin) and again refluxed at 65-70 °C overnight (16-24h). Next, the reaction mixture was allowed to cool to room temperature and 15% H₂SO₄ added with stirring to ensure precipitation of the product and to dissolve the undesired potassium salt side products. The product was obtained by filtration and washing with water. After washing with water, the product was collected and dried for at least one day in a vacuum oven at 45 ° C. The result is summarized in the table 6 below.

**Table 6 - P and N content of the sample prepared according to example 5 and expressed as percent composition.**

| **Sample** | **Details** | **P% content** | **N% content** |
|---|---|---|---|
| DLO1-HCCP-ANI | DLO1HCCP - P,N modified (aniline) | 11,0 ± 0,0 | 7,7 ± 0,0 |

### Example 6. N,P-modification of DLO with TMP

The lignin was dissolved in 0.1M NaOH solution at a concentration of 5 wt% lignin by stirring at room temperature until all the lignin was dissolved by using a mechanical stirrer. Next, formaldehyde solution (37 wt% in water) was added to the alkaline lignin solution in a ratio of 5.5 molar equivalents to the total hydroxy content of the lignin. Next, melamine was added to the solution in ratio of 1.3 molar equivalents to the total hydroxy content of the lignin. The reaction mixture was heated to 70 °C and allowed to react overnight (16-24h). Afterwards, the reaction mixture was allowed to cool down to room temperature. Trisodium trimetaphosphate (TMP) was added in a ratio of 1 molar equivalents to the total hydroxy content of the lignin and again refluxed at 70 °C overnight (16-24h). Afterwards, the reaction mixture was allowed to cool down to room temperature and acidified to a pH of 3 using 15% H₂SO4. The product was obtained by filtration and washing with water. After washing with water, the product was collected and dried for at least one day in a vacuum oven at 45 °C. The product was analyzed with elemental analysis and ICP-OES to obtain the nitrogen and the phosphorous content of the samples. The result is summarized in the table 7 below.

**Table 7 - P and N content of the sample prepared according to example 6 and expressed as percent composition.**

| **Sample** | **Details** | **P% content** | **N% content** |
|---|---|---|---|
| DLO1-MEL-TMP | DLO1TMP - N,P modified (melamine) | 1,0 ± 0,0 | 20,7 ± 0,2 |

### Example 7. P'N-modification of DLO with the Kabachnik-Fields style reaction

To a vessel, the lignin and diethylenetriamine (DETA) was added (1.0 molar equivalents, 8.5 mmol of NH) with acetonitrile solvent at a concentration of 20 wt% DETA-lignin. HCl (1 M) solution was added until pH 3-4 was reached and the mixture heated to 50 °C to form a solution. Then 9,10-dihydro-9-oxa-10-phosphaphenanthrene 10-oxide (DOPO) or diethyl phosphite (EtO₂POH) (1.0 molar equivalents, 8.5 mmol) and formaldehyde (12.7 M, 1.0 molar equivalents, 8.5 mmol) was added and stirred for 5 hours at 80 °C. The solvent was removed and the final product was obtained by filtration and washing with water. After washing with water, the product was collected and dried for at least one day in a vacuum oven at 45 ° C. The result is summarized in the table 8 below.

**Table 8 - P and N content of the samples prepared according to example 7 and expressed as percent composition.**

| **Sample** | **Details** | **P% content** | **N% content** |
|---|---|---|---|
| DLO1-DETA-DOPO | DLO1DOPO - N,P modified (DETA) | 7,1 ± 0,7 | 1,6 ± 0,0 |
| DLO1-DETA-EtO2POH | DLO1EtO2POH - N,P modified (DETA) | 3,2 ± 0,1 | 1,8 ± 0,0 |

### Analytical procedures

**Gel permeation chromatography (GPC): 1. Alkaline GPC -** For analysis, 10 mg of the lignin sample material was dissolved in 3.3 mL of aqueous 0.1 M NaOH at RT. The GPC system comprised a Shimadzu Prominence autosampler, degasser, pump, column oven, refractive index detector, and UV detector (Shimadzu Europa GmbH, Duisburg, Germany). The columns used were a Ultrahydrogel 500 column (300 mm × 7.8 mm, 10 µm particle size) and a Ultrahydrogel 120 column (300 mm × 7.8 mm, 6 µm particle size) in series covering a separation range from 100 g/mol to 400000 g/mol (Waters, EttenLeur, The Netherlands). A 100 µL sample aliquot was injected by the autosampler. The eluent was a solution of 0.1 M NaNO₃ (aqueous) and acetonitrile 80/20 (v/v). The pH of the eluent was adjusted to 11 by adding drops of a 50 wt% aqueous NaOH solution. The column temperature was 40 °C, the flow rate was 0.4 mL/min, and the molar mass parameters *M_{w}* and *Mₙ* were calculated based on a calibration with dextrane standards (covering a range of 180 g/mol to 401300 g/mol).

**2. THF GPC** - For analysis, 10 mg of the lignin sample material was dissolved in 1 mL THF at RT. For THF GPC the same liquid chromatography instrumentation was used but with different columns and eluent. The columns used were a Styragel HR 0.5 column (300 mm x 7.8 mm, 5 µm particle size) and a Styragel HR 1 column (300 mm x 7.8 mm, 5 µm particle size) in series covering a range of 0 g/mol up to 100000 g/mol (Waters, EttenLeur, The Netherlands). A 100 µL sample aliquot was injected by the autosampler. THF was used as eluent, the column temperature was 40 °C, the flow rate was 0.8 mL/min, and Mw and Mn were calculated based on calibration with polystyrene standards (covering a range of 162 g/mol to 12980 g/mol).

**³¹P nuclear magnetic resonance spectroscopy (NMR):** ³¹P NMR was done according to J. Gracia-Vitoria et al., Ind. Crops Prod., 176 (2022), 11405.).All preparational steps were done in a glove box under argon (Ar) atmosphere. First, the stock solution containing 269.57 mg of the internal standard (IS) N-hydroxy-5-norbornene-2,3-dicarboxylic acid imide (NHND, CAS: 21715-90-2, purity = 97%, Sigma-Aldrich), 24 mg of chromium acetylacetonate (Cr(acac)₃, CAS: 21679-31-2, purity = 97%, Sigma-Aldrich), 8 mL anhydrous deuterated chloroform (CDCl₃, CAS: 865-49-6, purity = 99.8 atom% D, Sigma-Aldrich), and 12.8 mL of anhydrous pyridine (CAS: 110-86-1, purity = 99.8%, Sigma-Aldrich) was prepared. Approximately 30 mg of sample material was transferred into a 1.4 mL vial and 0.75 mL of the stock solution was added. The vials were closed, and the samples were vortexed for 60 s. 0.1 mL of 2-chloro-4,4,5,5-tetramethyl-1,2,3-dioxaphospholane (TMDP, CAS: 14812-59-0, purity = 95%, Sigma-Aldrich) was added and the samples were vortexed for 60 s. Then, the samples were transferred into NMR tubes and placed into the autosampler. The instrument used was a benchtop Spinsolve 80 MHz Ultra series NMR (Magritek, Aachen, Germany) with a dual probe for ³¹P detection. The acquisition parameters were 512 scans, repetition time of 10 s, a pulse angle of 90°, the bandwidth was set to 154 ppm, the center frequency was set to 140 ppm, NOE enhancement and ¹H decoupling were applied.

**Gas chromatography - flame ionization detector (GC-FID):** The monomer content of the DLO materials was detemined using GC-FID. First, a stock solution of model alkylphenols (2-isopropylphenol, CAS: 88-69-7, purity = 98%; phenol, CAS: 108-95-2, purity ≥ 99%; 4methylphenol, CAS: 106-44-5, purity = 99%; 2,6-dimethoxyphenol, CAS: 91-10-1, purity = 99%; 2methoxy-phenol, CAS: 90-05-1, purity ≥ 99%; 4-methylguaiacol, CAS: 93-51-6, purity ≥ 98%; 4-methyl2,6-dimethoxyphenol, CAS: 6638-05-7, purity ≥ 97%; 4-ethylphenol, CAS: 123-07-9, purity = 99%; 4ethyl-2-methoxy-phenol, CAS: 2785-89-9, purity ≥ 98%; 4-propylphenol, CAS: 645-56-7, purity = 99%; 2-methoxy-4-propylphenol, CAS: 2785-87-7, purity ≥ 99%; 2-methoxy-4-(2-propenyl)-phenol, CAS: 9753-0, purity = 99%; 2,6-dimethoxy-4-prop-2-enylphenol, CAS: 6627-88-9, purity ≥ 95%; 4-(3hydroxyprop-1-en-1-yl)-2-methoxyphenol, CAS: 458-35-5, purity = 98%; 4-(3-hydroxyprop-1-en-1-yl)2,6-dimethoxyphenol, CAS: 537-33-7, purity = 80%, technical grade; 2-Methoxy-4-propenylphenol, CAS: 97-54-1, purity = 98%; 4-(3-Hydroxypropyl)-2-methoxyphenol, CAS: 2305-13-7, purity = 97%) in acetonitrile was prepared containing 10 mg/mL of each model compound. Other alkylphenol species were previously identified on the basis of their retention time and mass spectra (MS). The stock solution was diluted with acetonitrile to obtain calibration solutions with concentrations of 500, 250, 125, 75, 50, 25, 10, and 5 µg/mL. Then, 50 mg of dry sample material was dissolved in 2 mL of THF at RT. 200 µL of acetonitrile, 200 µL of the calibration solutions, and 200 µL of the sample solution were transferred into separate GC-vials of 1.5 mL. 50 µL of *N*-methyl-*N-*(trimethylsilyl)trifluoroacetamide (MSTFA, CAS: 24589-78-4, purity ≥ 98.5%) and 650 µL of pyridine were added to each vial. The vials were closed and kept at 80 °C for 20 min. For the control of retention time, 100 µL of the sample solutions were transferred into additional 1.5 mL GC-vials and 100 µL of the 250 µg/mL-standard solution were added to each sample. 50 µL of MSTFA and 650 µL of pyridine were added, the vials were closed, and kept at 80 °C for 20 min. An aliquot of 1 µL of each vial was injected (injection T = 300 °C) into the GC-FID system (Trace 1600 Gas Chromatograph, Thermo Scientific Inc, USA). For the analysis, a DB-5ms column (30 m x 0.25 mm x 0.25 µm, Agilent Technologies Inc., USA) was used with He as a carrier gas at a flow rate of 0.7 mL/min. The oven was kept at 50 °C for 1 min and heated to 150 °C at 15 °C/min. 150 °C were kept for 6 min before further heating up to 305 °C at 10 °C/min. The oven was kept at 305 °C for 10 min. The total run time was 40 min. The FID temperature was 310 °C.

**Carbohydrate content analysis:** The monosaccharide composition of samples was determined according to the National Renewable Energy Laboratory (NREL)-procedure [3]. First, 0.1 g lignin were treated with 1 mL of aqueous 72 wt% H₂SO₄ solution at 30 °C for 1 h. Then, the mixture was diluted to 4 wt% H₂SO₄ using (deionized/MilliQ) water and heated to 121 °C for 1 h in an autoclave. A 1 mL aliquot of the hydrolysate was mixed with 0.5 mL of aqueous 0.4 M NaOH solution and centrifuged for 10 min. The liquid phase was analyzed by high-performance anion exchange chromatography coupled with a pulsed amperometric detector (HPAEC-PAD) supplied by Thermo Scientific Inc., USA (Dionex ICS-5000) according to a previously published procedure [4]. The columns used were a Dionex CarboPac PA1 column (4 mm x 250mm) and a Dionex CarboPac PA1 guard column (4 mm x 50 mm) at 25 °C. Aqueous 0.25 M NaOH, 1 M NaOAc, and Milli Q water were used in different gradient mixtures as a mobile phase at 1 mL/min. Rhamnose, arabinose, galactose, glucose, xylose, fructose, ribose, fucose, mannitol, galacturonic acid, and glucuronic acid were used as calibration standards in Milli Q water with concentrations from 10 mg/L to 500 mg/L. Control samples with a known polysaccharide concentration were included in the calibration series. The relative standard deviation was lower than 3%.

**Elemental analysis:** The CHNS measurements were based on a high-temperature combustion at 1150°C under oxygen atmosphere and thermal conductivity detection. The oxygen concentration analysis was based on the conversion of sample oxygen to carbon monoxide through hightemperature pyrolysis at 1450 °C and thermal conductivity detection. The CHNS measurements were performed with the vario EL cube element analyser (Elementar Analysensysteme GmbH, Germany) and the oxygen measurement was conducted with a rapid OXY cube element analyser (Elementar Analysensysteme GmbH, Germany).
**Thermogravimetric analysis:** Thermogravimetric analysis (TGA) was performed on a NETZSCH STA449 F3 Jupiter instrument. ~100 mg of sample was heated from 30-35 to 800-850 °C (20 °C min⁻¹) under an nitrogen flow. If residual solvent was still observed in the measured TGA sample, despite the use of the vacuum oven for sample drying, a thermal pretreatment step (120-130 °C) was carried out in case before the actual TGA sample measurement.

**Inductively coupled plasma optical emission spectroscopy (ICP-OES):** ICP-OES was done with a Thermo Scientific iCAP PRO XP ICP-OES instrument after high pressure microwave digestion of the sample with HCl/HNO₃ (3:1) for 180 minutes at 250 °C using an Anton Paar Multiwave 7000 Microwave digestion system.

**Cone calorimetry:** A mass loss cone calorimeter (MLC) from Fire Testing Technology was used according to standard procedures to evaluate the fire behavior. Samples (100 × 100 × 3 mm³) were exposed to an external heat flux of 35 kW·m⁻², corresponding to common heat flux in a mild fire scenario. During this fire experiment, the peak heat release rate (pHRR), the total heat release (THR), and the time to ignition (TTI) were recorded as key parameters affecting the fire scenario..

### Results and Discussion

The functionalization of DLO to incorporate phosphorus and nitrogen content was as effective as in the comparative example using polymeric lignin. In this invention, two types of DLO were produced from distinct feedstocks: hydrolysis lignin (DLO1) and organosolv lignin (DLO2), using VITO's reductive hydrogenation depolymerization technology platform. The two DLOs mainly differed in molecular weight distribution, monomer content, and hydroxyl group content. Both DLOs were successfully functionalized with phosphorus and nitrogen functional groups, showing similar phosphorus content (6.6 ± 0,1 wt% vs. 6.8 ± 0,4 wt%) and slight differences in nitrogen content (20.3 ± 0,1 wt% vs. 23.7 ± 0,7 wt%). This demonstrates that the process can be applied to different DLOs and behaves similarly to the comparative example using polymeric lignin (P: 7.2 ± 0,2 wt% and N: 22.5 ± 0,3 wt%).

Furthermore, the DLO allows for variations in nitrogen functional groups (melamine, adenine, guanine, and aniline) using the same synthetic protocol, providing the opportunity to fine-tune the nitrogen and phosphorus content on the lignin, as well as the specific nitrogen functional group. The procedure was applied on a laboratory scale (50 g). The importance of the nature of the lignin (DLO vs. polymeric lignin) was investigated using cone calorimetry and TGA measurements.

### Cone Calorimetry Results

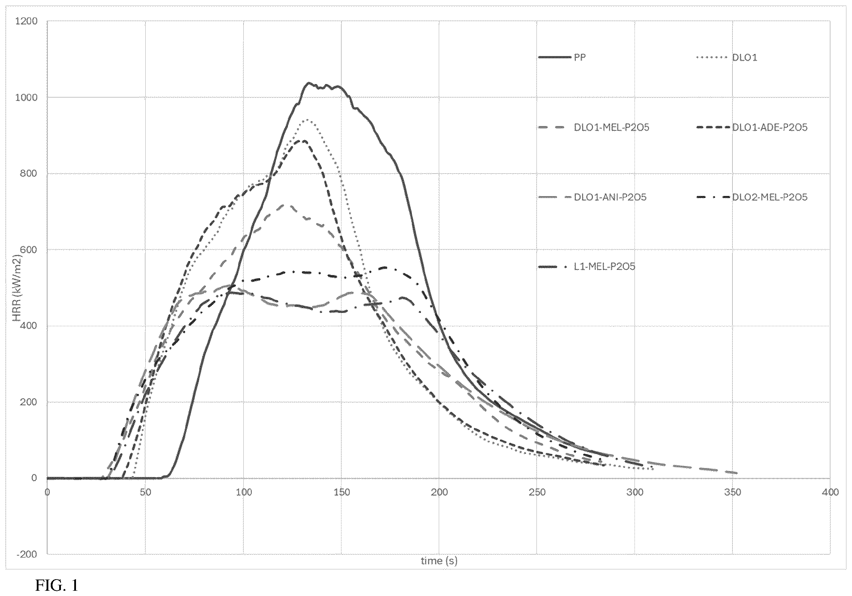

In Figure 1, heat release rate (HRR) results (using cone calorimetry) from polypropylene (PP) + 20 wt% lignin blends were prepared for different lignin samples to perform cone calorimetry tests and compare the effect of the DLO, functionalized DLO, and functionalized lignin (comparative example) on the HRR of the blended polymer material. Details on the different lignin samples obtained according to the examples above, and used in the Cone Calorimetry Heat Release Rate (HRR) measurements are provided in Table 8 below.

**Table 8 - lignin samples used in the blends with PP for Cone Calorimetry**

| **Sample** | **Details** |
|---|---|
| DLO1 | DLO1 |
| DLO1-MEL-P2O5 | DLO1 - N,P modified (melamine) |
| DLO1-ADE-P205 | DLO1 - N,P modified (adenine) |
| DLO1-ANI-P205 | DLO1 - N,P modified (aniline) |
| DLO2-MEL-P2O5 | DLO2 - N,P modified (melamine) |
| L1-MEL-P205 | Start hydrolysis lignin - N,P modified (melamine) |

The PP reference chosen is PP PHC 26 from SABIC (MFR @230 °C, 2.16 kg = 8 g/10 min). Seven samples of lignin were compared: unmodified DLO1, N,P modified DLO1 with melamine, adenine, and aniline, N,P modified DLO2 with melamine, and as a comparative example, N,P modified polymeric lignin with melamine.

Cone calorimetry showed the typical effect of lignin, even as unmodified DLO, to reduce the time to ignition (TTI) due to protective charring in the condensed phase and reduction of the total HRR. The unmodified PP sample had an HRR peak (pHRR) of around 1000 kW/m², while N,P DLO1 modified with aniline, N,P DLO2 modified with melamine, and N,P polymeric lignin modified with melamine reduced the pHRR by half, to around 500 kW/m². Similarly, TTI was reduced by half from 59 seconds for neat PP to around 30 seconds for all N,P modified lignin samples, while final char content increased from less than 1 wt% to almost 8 wt%. These results indicate that N,P modified DLO behaves similarly to N,P modified polymeric lignin in terms of pHRR and TTI metrics. However, a performance benefit of N,P modified DLO over the comparative example of N,P modified polymeric lignin is that on average the time to peak heat release is significantly extended for the N,P modified DLO2 samples, from just 94 seconds to almost double, 172 seconds for the N,P DLO2 modified with melamine.

**Table 9 - Cone Calorimetry Results**

| **Sample** | **Total heat release (THR) (MJ/m2**) | **mean HRR (kw/m2)** | **Peak HRR (PHHR) (kW/m2)** | **Time to PHHR (s)** | **Time to ignition (TTI) (s)** | **Residual mass (wt%)** |
|---|---|---|---|---|---|---|
| PP | 111 | 472 | 1036 | 133 | 59 | 0,6 |
| DLO1 | 98 | 469 | 942 | 132 | 44 | 3,0 |
| DLO1-MEL-P2O5 | 92 | 276 | 722 | 122 | 28 | 4,85 |
| DLO1-ADE-P2O5 | 96 | 296 | 886 | 131 | 38 | 5,67 |
| DLO1-ANI-P2O5 | 85 | 277 | 505 | 93 | 31 | 4,20 |
| DLO2-MEL-P2O5 | 91 | 252 | 553 | 172 | 31 | 7,50 |
| L1-MEL-P2O5 | 84 | 279 | 487 | 94 | 32 | 7,94 |

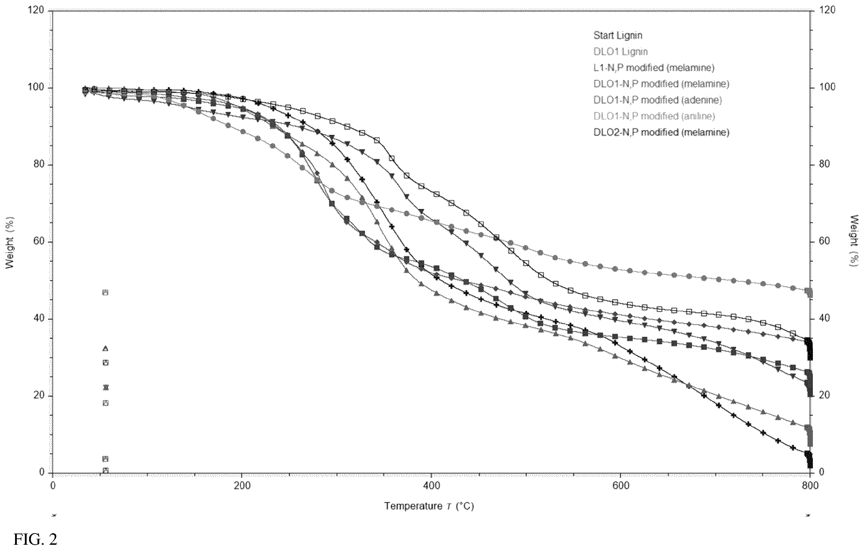

In Figure 2, the TGA results of the different DLOs (modified and unmodified) and polymeric lignin illustrate the effect of DLO on increasing the thermal stability of the N,P modified lignin-derived flame retardant additives. This effect is quantified using two metrics: Td5%, the temperature at which 5% of the sample mass is lost, and the residual mass at 800 °C, which provides a proxy for the charring ability of the sample. Charring is the most important fire retardant mechanism for lignin and N,P modified lignin.

### TGA Results

The TGA results of the different DLOs (modified and unmodified) and polymeric lignin are provided in Figure 2 and Table 10 below.

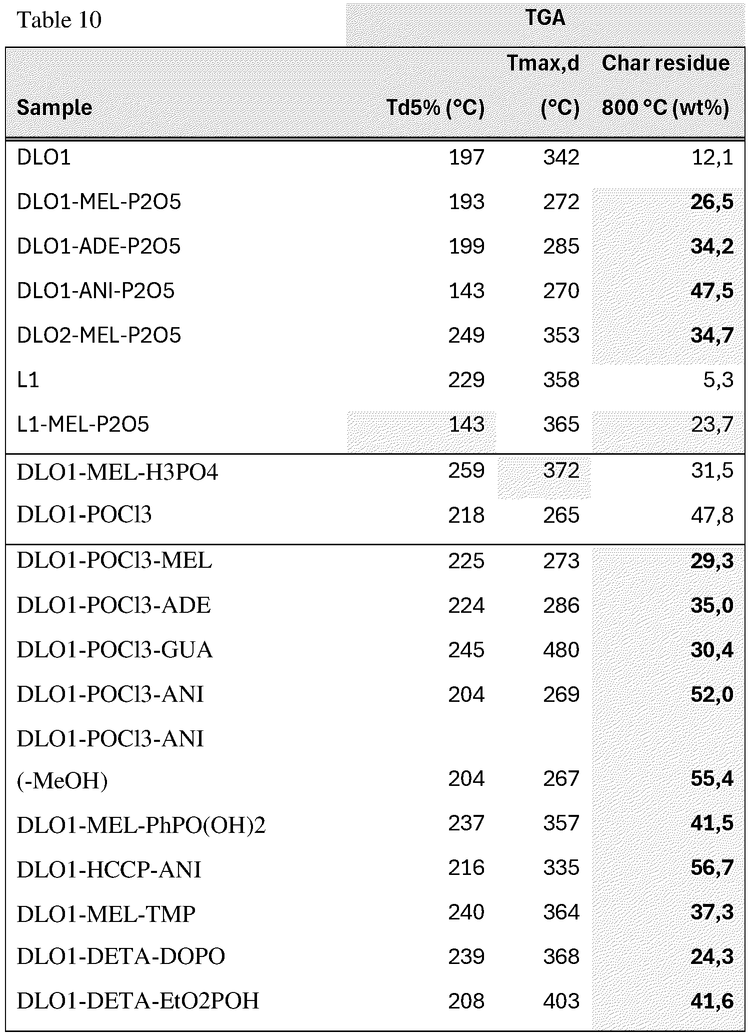

Interestingly, the initial good thermal stability of polymeric lignin is lost after functionalization with N,P groups (comparative example), with a significant decrease in thermal stability from a Td5% of 229 °C for polymeric lignin to a Td5% of 143 °C for N,P modified polymeric lignin. In contrast, no significant difference in Td5% is found between DLO1 and N,P modified DLO1 (193-199 °C), depending on the N modification for melamine and adenine; with the exception being aniline. The best Td5% is obtained for the N,P DLO2 sample, with a value of 249 °C after a thermal pretreatment (120-130 °C, 60 min) to remove residual unreacted monomers that evaporate at low temperatures to illustrate the underlying thermal stability of DLO2. This improvement in thermal stability of the N,P modified DLO over the comparative example, N,P modified polymeric lignin, is important as FR-additives are blended at elevated temperatures (180-325°C) and hence require temperature stability at these processing temperatures.

Finally, a higher charring content is found for all N,P modified DLO samples (between 26,5 and 47.5 wt% at 800 °C) compared to the comparative example of N,P modified polymeric lignin, which achieves a char content of 23,7 wt% at 800 °C.

## Claims

1. A method for preparing a flame-retardant additive, said method comprising:
providing a depolymerized lignin, and
treating said depolymerized lignin with a phosphorylation agent and an amine reagent to obtain a phosphorous and nitrogen modified depolymerized lignin as flame retardant additive.

2. The method according to claim 1, wherein the depolymerized lignin is **characterized by** a number average molecular weight (Mn) in the range of 200 to 1500, a weight average molecular weight (Mw) in the range of 200 to 4000, and a polydispersity index (PDI) in the range of 1 to 4.

3. The method according to claim 1 or 2, wherein the depolymerized lignin is **characterized by** an OH distribution as determined by P³¹ NMR and expressed as the content in mol/g for aliphatic OH-functionalities (AlOH) ranging from 2,0 to 3,5; for condensed aromatic OH-moieties (CarOH) from 2,0 to 3,1 and for uncondensed aromatic OH-moieties (UrOH) ranging from 0,75 to 1,00.

4. The method according to any one of the preceding claims, wherein the phosphorous and nitrogen modified depolymerized lignin contains from 1% to 50% phosphorous and from 1% to 30% nitrogen.

5. The method according to any one of claims 1 to 4, wherein the phosphorylation agent is selected from the group consisting of phosphorus pentoxide, phosphoric acid, phosphorus oxychloride, phenylphosphonic acid, hexachlorocyclotriphosphazene, 9,10-dihydro-9-oxa-10-phosphaphenanthrene 10-oxide (DOPO), and diethyl phosphite.

6. The method according to any one of claims 1 to 5, wherein the amine reagent is selected from the group consisting of melamine, adenine, aniline, diethylenetriamine, and guanine.

7. The method according to any one of claims 1 to 6, wherein the depolymerized lignin is obtained by reductive catalytic depolymerization of lignin.

8. The method according to claim 7, wherein the reductive catalytic depolymerization is performed in either batch or continuous fashion.

9. The method according to claim 8, wherein the batch depolymerization is performed on soluble lignin fractions obtained by mixing lignin in a suitable solvent such as methanol at 20 wt% for 4 h at 50 °C and by separating the insoluble fraction from the mixture, such as via (vacuum) filtration.

10. The method according to claim 9, wherein the soluble lignin fraction is depolymerized by exposure of the soluble fraction to H₂ in a reactor at elevated temperatures and pressures, utilizing catalysts like Pd/C.

11. The method according to claim 10, wherein the soluble fraction is applied in a reactor at 235 °C for 2 h over 5% Pd/C with an initial H₂ pressure of 30 bar.

12. The method according to claim 8, wherein the continuous lignin depolymerization is carried out by exposing the lignin to a constant H₂ flow using a continuous flow reactor.

13. The method according to claim 12, wherein the lignin is supplied to the reactor as lignin solutions pumped at flow rates of 25, 35, 50, and 100 mL h⁻¹ through a fixed bed reactor at temperatures of 200, 215, 225, and 235 °C.

14. The method according to claims 12 and 13, wherein the catalysts used in the continuous lignin depolymerization are 1% Pd and 2% Pd on Al₂O₃ support.

15. A phosphorous and nitrogen modified depolymerized lignin for use as a flame-retardant additive; in particular in blends with polymers having higher melting points.

16. The phosphorous and nitrogen modified depolymerized lignin for use according to claim 15, wherein said phosphorous and nitrogen modified depolymerized lignin is obtained according to the method of any one of claims 1 to 14.
